# EUROPÄISCHE PATENTSCHRIFT

(11) **EP 3 139 802 B1**
(45) Veröffentlichungstag und Bekanntmachung des Hinweises auf die Patenterteilung: **22.07.2020**
(21) Anmeldenummer: 15733621.5
(22) Anmeldetag: 31.05.2015
(51) Int. Cl.: A47J 37/06, A47J 37/07

(54) **GRILL-TEPPANYAKI**
TEPPANYAKI GRILL
GRILLE POUR TEPPANYAKI

(30) Priorität: 07.05.2014 DE 202014003842 U
(43) Veröffentlichungstag der Anmeldung: 15.03.2017
(73) Patentinhaber: Kuse, Kolja, 81925 München (DE)
(72) Erfinder: Kuse, Kolja, 81925 München (DE)
(86) Internationale Anmeldenummer: PCT/EP2015/001104
(87) Internationale Veröffentlichungsnummer: WO 2015/172893

(56) Entgegenhaltungen:
- DE-C1- 366 558
- DE-C1- 367 373
- US-A- 4 428 281
- US-A- 5 839 361

## Beschreibung

Herkömmliche Grillroste von Holzkohlegrills oder auch Elektro- oder Gasgrills haben einen groben Rost, bei dem die in der Regel runden Gitterstäbe zur Auflage des Grillguts einen relativ großen Abstand haben. Das Grillgut ist der Hitze durch brennendes Gas oder Elektrogrill, dem Feuer oder der Glut großflächig direkt ausgesetzt. Auf diesen Gitterstäben, welche aufgrund des hohen Gitterabstands relativ viel Luft ausgesetzt sind, und deshalb selbst auch relativ kalt bleiben, klebt das Grillgut in der Regel fest und lässt sich auch nicht mehr ohne Beschädigung des Grillguts lösen. Andere Lösungen beschreiben dicke gusseisene Platten, in die kleine schmale Schlitze eingelassen sind. Die Stege haben in der Regel aus horizontaler Sicht auf den vertikalen Schnitt durch eine solche Platte eine Wölbung, damit das Gargut nach Möglichkeit nicht vollständig auf der Platte aufliegt und damit die Gefahr des Anbrennens und Festklebens auf der Platte gemindert wird (DE 367373 und DE 366558). Andere Systeme haben längliche, jedoch gerade Schlitze in massiven Eisenplatten, um direkt übertragene Wärmezufuhr und Strahlungswärme gleichzeitig zu nutzen (US Patente 4428281 und 5839361).

Auf einer Eisenplatte zu grillen ist mit einem Teppanyaki in Form einer durchgehend ebenen Eisenplatte, welche erhitzt wird, eine gute Alternative, weil die Auflage für das Grillgut sehr heiß wird, weshalb sich die Poren schließen und das Fleisch sich schnell von der heißen Platte löst. Die Wärmezufuhr ist anders und auch besser regelbar, als ein Kohlefeuer bzw. dessen Glut. Der eigentliche Vorteil ist, dass das Grillgut nicht am Metall festklebt und sich auf einer ebenen Platte einfach mit einem Pfannenwender wenden lässt. Es fehlt aber hier die Kontakt zur Strahlungshitze einer Kohleglut, einer Gasflamme oder der Strahlung eines Elektrogrills. Die vorliegende Erfindung setzt sich zum Ziel beide Techniken zu kombinieren, um einerseits das Grillgut mit dem Geschmack der direkten Strahlungshitze und einer schönen braunen Grillfärbung und Kruste zu versehen, andererseits die Wärmezufuhr besser regeln zu können und dabei insbesondere das lästige Ankleben von Fleisch oder Fisch auf dem Grillrost zu vermeiden, und auch, um das Grillgut einfach wenden zu können.

Bei Holkohlegrills und auch anderen Grills geht durch den Gitterrost zudem viel Wärme durch die erhitze Luft, die naturgemäß nach oben steigt, verloren.

Um die Wärme zu halten und um das Grillgut besser von dem Stahl zu trennen wird statt einem Rost mit großem Gitterabstand und runden Gitterstäben eine Platte verwendet, die in der Regel eine vom prinzipiellen Aufbau her ebene Eisenplatte ist, welche Schlitze besitzt, die einen Kontakt zwischen Grillgut und Gas- oder Kohlefeuer bzw. Strahlungshitze durch Elektrostäbe ermöglichen und gleichzeitig die Oberfläche einer ebenen Stahlplatte mit dem Vorteil bietet, dass das Grillgut wie auf einer Teppanyaki-Platte mit einem Pfannenwender aus dünnem Blech ohne anzukleben abgehoben und aufgrund des rechteckigen Querschnitts und somit ebenen Oberfläche der Stege gewendet werden kann, ohne dass das Grillgut an runden Roststäben eines herkömmlichen Grillrostes kleben bleibt.

Trotz des Vorteils des leichten Wenden des Grillguts wie auf einem Teppanyaki bekommt das Grillgut den Geschmack, der durch den Kontakt zur Strahlungshitze durch Gasflamme, Elektrogrill oder Kohlenfeuerglut entsteht.

Zu diesem Zweck sind die Schlitze im Verhältnis nicht viel breiter als die Stege und die Stege sind so engstehend, dass das Fleisch nicht zwischen den Stegen "durchhängt", damit es mit einem ebenen dünnen Pfannenwender leicht und ohne zu hakeln abgehoben und gewendet werden kann.

Dadurch entsteht der Vorteil, dass die Luft in der Konvektion nach oben durch die dichte und hohe Zahl der rechteckigen Stäbe der Platte beschränkt wird und somit die Hitze bzw. Glut nach oben durch die Platte zum großen Teil durch die Fläche der Stahlplatte abdeckt wird, was in Folge des Hitzestaus eine erhebliche Einsparung von Gas- oder Elektro-Energie bzw. Menge an Grill-Kohle zur Folge hat, da deutlich weniger warme Luft durch die engen Schlitze nach oben steigt. Die Platte wird dabei sehr heiß und fängt unter Umständen an zu glühen. Durch die hohe Hitze löst sich das Fleisch von selbst von der Platte ab und klebt nicht wie bei den weit auseinanderstehenden Grillrost-Stäben an, die bei weitem nicht so heiß werden, wie die geschlitzte Platte. Das selbstständige Lösen des Grillguts vom Rost aufgrund der durch Hitzestau erhöhten Temperatur des Grillrostmaterials ist der entscheidende technische Unterschied zu bisherigen Grillrosten, auf denen das Grillgut in der Regel deshalb festklebt, weil die Temperatur des Rosts sich in einem ungünstigen Temperaturbereich bewegt, der ein Kleben des Fleischs auf Metall begünstigt. Bei höheren Temperaturen jedoch verbiegen sich die geraden Stege und wölben sich hoch. Dieses Problem wird durch die Erfindung gelöst, ohne auf den direkten Kontakt des Grillguts zur Strahlungswärme bei sehr hohen Temperaturen zu verzichten.

Damit die Platte zum besseren bzw. optimalen Wenden des Grillguts tatsächlich auch unter sehr hohen und örtlich auf der Platte unterschiedlichen Temperaturen eben bleibt, ist es notwendig die Geometrie der Stege so auszulegen, dass diese sich nicht in vertikaler Richtung wölben und durch die Wärmeausdehnung und deren Begrenzung durch den umlaufenden Rahmen nach oben oder unten verbiegen, sondern seitlich ausweichen, damit die Platte an der Oberfläche eben bleibt. Die Stege der Platte, die einen rechteckigen Querschnitt haben, sollen sich in eine durch die Geometrie vorgegeben Richtung rein in horizontaler und nicht in vertikaler Richtung ausdehnen oder biegen. Zu diesem Zweck werden zwei Maßnahmen getroffen. Um die durch die Erhitzung und Ausdehnung zwangsläufig stattfindende Verbiegung der Stege in vertikaler Richtung zu vermeiden und die Biegung der Stege in horizontale Richtung zu leiten, werden die vom Querschnitt her rechteckig ausgelegten Stäbe und Schlitze gleichermaßen und in einheitlicher Ausrichtung in horizontaler Richtung vorgekrümmt. Um diesen Effekt zu verstärken, werden die Stege schmaler gemacht als die durch die Dicke der Platte vorgegebene Höhe der Stege. Dadurch wird die kollisionsfreie Ausdehnung der Stäbe in der horizontalen Ebene vorgegeben und sichergestellt, wobei die Abstände zwischen den Stäben im Wesentlichen gleich bleiben. Die Schlitze und Stäbe haben dabei vorzugsweise identische Formen einer Sinuswelle oder Ausschnitte davon mit einer Amplitude, die in der horizontalen Ebene liegt.

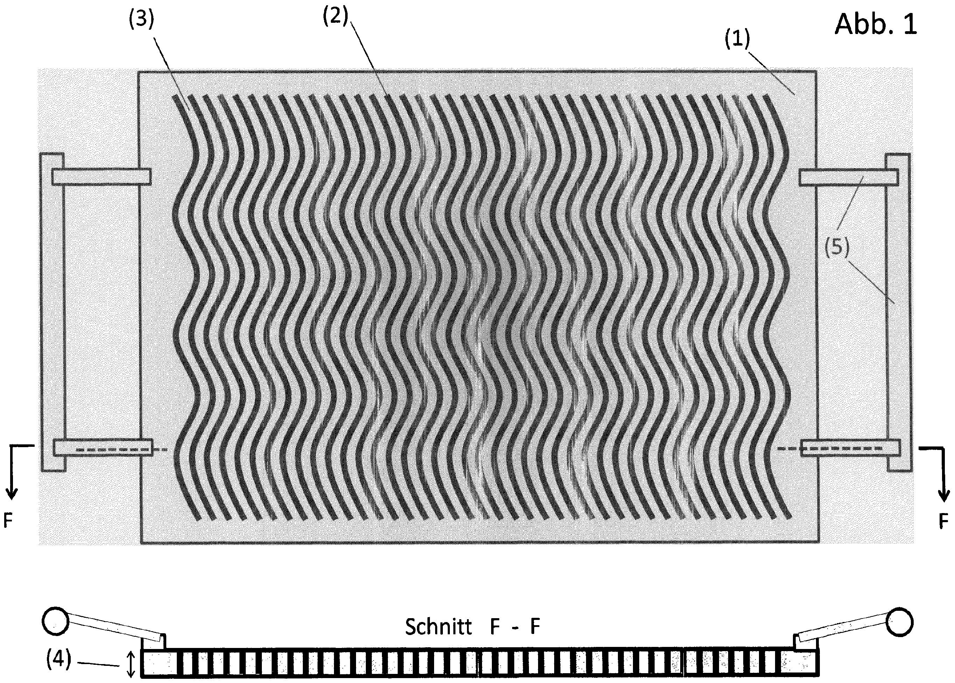

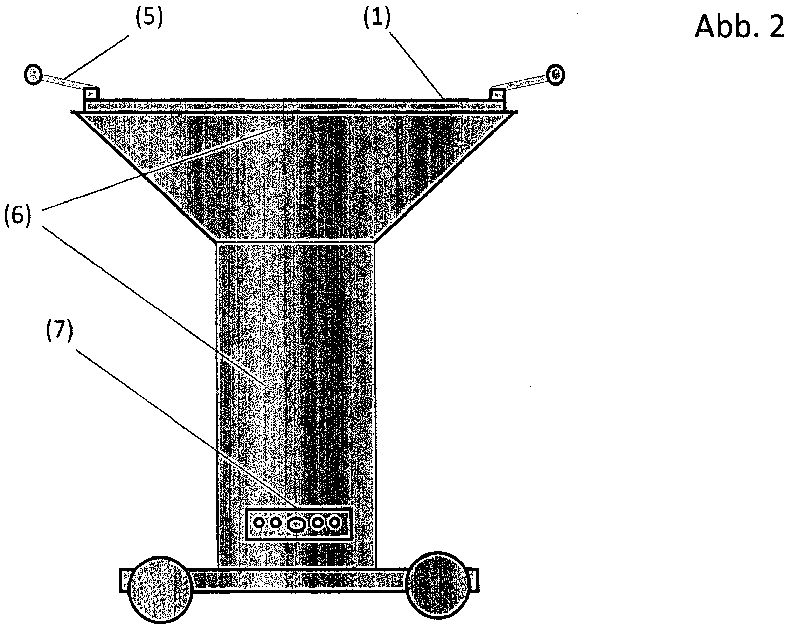

Eine der vielen möglichen Ausführungen der Erfindung gemäß Abbildung 1 beschreibt eine Anordnung mit einer an der Oberfläche ebenen Stahlplatte (1), welche Schlitze (2) hat, die in die Platte geschnitten sind. Die Schlitze haben eine gleichmäßige Breite entlang einer wellenförmigen Linie, deren Kurvenverlauf in der Ebene der Plattenoberfläche liegt, mit einem gleichmässigen Abstand der Stege, der nicht grösser ist, als die Stegbreite. Die Stege haben aufgrund des Schnitts einen quasi rechteckigen Querschnitt. Die Stege (3) sind schmaler als die Dicke der Stahlplatte (4). Griffe (5) an den Rändern der Platte ermöglichen das Handling und den Transport, auch dann, wenn die Platte heiß ist. Die Platte wird in Abbildung 2 auf einem Kamin-Holzkohlengrill (6) verwendet, der zur exakten Einstellung der Grilltemperatur einen stufenlosen Schieberegler (7) zur Einstellung der Luft- bzw. Sauerstoffzufuhr hat.

## Patentansprüche

1. Ebene Platte (1) als Grillrost für Holzkohlegrills, Gasgrills oder Elektrogrills zum Braten von Fleisch, Fisch, Gemüse und anderen Speisen, wobei vertikal in die Platte in gleichmäßigen Abständen Schlitze geschnitten sind, **dadurch gekennzeichnet, dass** Stege (3) und Schlitze (2) gleichermaßen und in einheitlicher Kurvenform vorgekrümmt sind und die Stege höher als breit sind.

2. Ebene Platte nach Anspruch 1, **dadurch gekennzeichnet, dass** die Stege (3) eine Wellenform mit Amplitude in der horizontalen Ebene aufweisen.

3. Ebene Platte nach Anspruch 1 und 2, **dadurch gekennzeichnet, dass** die Stege (3) genauso breit sind wie die Schlitze (2) oder breiter sind als die Schlitze.

4. Ebene Platte nach Anspruch 1 bis 3, **dadurch gekennzeichnet, dass** die Stege (3) eine sinusförmige Kurvenform mit Amplitude in der horizontalen Ebene aufweisen.

5. Ebene Platte nach Anspruch 1 bis 4, **dadurch gekennzeichnet, dass** die Platte (1) eine Eisen-, Edelstahloder Steinplatte ist.

6. Ebene Platte nach Anspruch 5, **dadurch gekennzeichnet, dass** die Platte (1) aus einem lebensmitteltauglichen Material besteht.

7. Ebene Platte nach Anspruch 1 bis 6, **dadurch gekennzeichnet, dass** die Platte (1) auf einem Holzkohle-, Gas- oder Elektrogrill zur Anwendung kommt.

## Claims

1. Flat plate as grillage for charcoal grills, gas grills or electric grills for roasting meat, fish, vegetables and other dishes, with slots cut vertically into the plate at regular intervals, **characterized in that** bars and slots are pre-curved equally and in a uniform curve shape and the bars are higher than wide.

2. Flat plate according to claim 1, **characterized in that** the bars have a wave shape with amplitude in the horizontal plane.

3. Flat plate according to claim 1 and 2, **characterized in that** the bars are as wide as the slots or are wider than the slots.

4. Flat plate according to claim 1 to 3, **characterized in that** the bars have a sinusoidal curve shape with amplitude in the horizontal plane.

5. Flat plate according to claim 1 to 4, **characterized in that** the plate is an iron, stainless steel or stone plate.

6. Flat plate according to claim 5, **characterized in that** the plate consists of a food-grade material.

7. Flat plate according to claim 1 to 6, **characterized in that** the plate is used on a charcoal, gas or electric grill.

## Revendications

1. Plaque plane comme grillage pour les barbecues au charbon de bois, les barbecues à gaz ou les grils électriques pour rôtir la viande, le poisson, les légumes et d'autres plats, avec des fentes coupées verticalement dans la plaque à intervalles réguliers, **caractérisées en ce que** les barres et les fentes sont pré-incurvées de manière égale et dans une forme de courbe uniforme et les barres sont plus hauts que larges.

2. Plaque plane selon la revendication 1, **caractérisée en ce que** les barres ont une forme d'onde d'amplitude dans le plan horizontal.

3. Plaque plane selon les revendications 1 et 2, **caractérisée en ce que** les barres sont aussi larges que les fentes ou sont plus larges que les fentes.

4. Plaque plane selon la revendication 1 à 3, **caractérisée en ce que** les barres ont une forme de courbe sinusoïdale d'amplitude dans le plan horizontal.

5. Plaque de plane selon la revendication 1 à 4, **caractérisée en ce que** la plaque est une plaque en fer, en acier inoxydable ou en pierre.

6. Plaque plane selon la revendication 5, **caractérisée en ce que** la plaque est constituée d'un matériau de qualité alimentaire.

7. Plaque plane selon les revendications 1 à 6, **caractérisée en ce que** la plaque est utilisée sur un gril à charbon, à gaz ou électrique.
